# EUROPEAN PATENT APPLICATION

(11) **EP 4 521 326 A1**
(43) Date of publication of application: **12.03.2025**
(21) Application number: 23195827.3
(22) Date of filing: 06.09.2023
(51) Int. Cl.: G06Q 20/38

(54) **DATA MANAGEMENT IN A DISTRIBUTED SYSTEM**

(71) Applicant: Mastercard International Incorporated, Purchase, NY 10577 (US)
(72) Inventor: RADU, Cristian, 1320 Beauvechain (BE); GALLO, Francesco, 8045 Graz (AT); JOHNSON, Alan, Maldon, CM9 8HW (GB)
(74) Representative: Keltie LLP

(57) **Abstract**

A method for migrating credentials from a first location to a second location is described. A set of credentials active in the first location are identified for migration to the second location. The identified credentials are then synchronised where used in connection with the first location, and the synchronised credentials are encrypted to form a set of encrypted credentials. This set of encrypted credentials is migrated to a third location - this third location is used only for transfer and not for use of the credentials. In due course the set of encrypted credentials is copied from the third location to the second location for decryption and use, and the copied set of encrypted credentials is deleted from the third location.

## Description

### Field of Disclosure

The present disclosure relates to data management in a distributed system. In particular embodiments, the disclosure relates to management of credentials across a complex distributed system.

### Background to Disclosure

Data management across distributed systems is complex, particularly when the same data needs to be held at different points in the distributed system to achieve required results, such as local speed of performance. Ensuring consistency across the distributed system is necessary to ensure that changes in data at one point are reflected, or otherwise addressed, wherever that data is held.

This may apply where a credential needs to be used across a complex distributed system - for example, a system where the credential is required by a user to access or use a globally accessible system. "Credential" is here considered in a broad sense, as digital data that represents, or contributes to the representation of, a user - a credential may then be used, for example, to determine whether the user can access a digital service. Use of a credential in this way may become particularly challenging where the rules for access or use of the credential differ for different regions of the distributed system - for example, if there are requirements as to the use made of the credential in a particular geography. This may, for example, require that any interaction with that credential take place within that particular geography, thus also requiring a copy of that credential in that geography.

The need to use a credential to access services globally in this way means that this issue is potentially relevant to any service requiring global access but subject to local legal requirements. This issue is particularly relevant for banking and financial services. Digital transactions, such as online and mobile payment transactions, are increasingly common. To address security concerns, tokenisation has been developed as a mechanism. This is a mechanism in which the card number is replaced by another number (i.e., the card is tokenised in the sense that a Token is granted corresponding to the card's PAN), which is used in its place in digital transactions. This provides additional security for the payment card and enables digital transactions to be performed efficiently. Such a token is a particular example of a credential, as discussed above.

It would be desirable to provide user credentials associated with tokenisation and related services by a set of geographically distributed servers within a distributed transaction system, rather than one central server or data centre. This would make it easier to service local geographies according to local rules.

### Summary of Disclosure

Despite the advantages the distributed transaction system, having credentials stored in a set of geographically distributed servers can cause particular problems if a credential needs to be available for use but may also need to be established for use in a new geography. Not only does there need to be consistency between different versions of the credential, but there is risk both of loss of data and delay in performance. It would be desirable to address such concerns efficiently without making fundamental changes that would prevent use of the system by an installed base of computer devices and systems.

The present disclosure provides a description of systems and methods for management of credentials across a complex distributed system.

In a first aspect, the disclosure provides a method for migrating credentials from a first location to a second location, the method comprising: identifying a set of credentials active at the first location for migration to the second location; synchronising the identified credentials where used in connection with the first location; encrypting the synchronised credentials to form a set of encrypted credentials; migrating the set of encrypted credentials to a third location, wherein the third location is used only for transfer and not for use of the credentials; copying the set of encrypted credentials from the third location to the second location; decrypting the encrypted credentials at the second location; and deleting the copied set of encrypted credentials from the third location.

In embodiments, the encrypted synchronised credentials may be earmarked as transferrable for at least a first database and at least one backup database associated with the first location. The first database may be a primary database for storage and use of credentials in connection with the first location with the at least one backup database storing the same credentials information as the first database so that it may be used if the first database fails.

In embodiments, the credentials are tokens representing payment cards in a transaction system. The encrypted synchronised tokens may be stored at the third location with a same token unique reference as in the first location. The encrypted tokens may be copied to the second location on the token being requested for a payment transaction associated with the second location.

In embodiments, the method may further comprise on a payment transaction associated with the second location being received for the token, requesting, from the second location, an updated status of the token; identifying the token as a transferable token; transferring the set of encrypted credentials for the token to the second location. In such a case, prior to requesting an updated status of the token, the method may involve synchronising detokenization tables of the second location with the third location.

In embodiments, the method may further comprise: requesting, by the second location, the set of encrypted credentials, wherein the set of encrypted credentials comprise an encrypted detokenisation pair, on the token being identified as transferable; and decrypting the requested token from the encrypted detokenization pair at the second location.

In an alternative embodiment, the encrypted tokens may be copied to the second location on a token status being changed such that the token status includes association with the second location.

In embodiments of the disclosure, the third location may be accessible via the cloud. The first, second and third locations may comprise databases for storage of tokens.

In embodiments, the encryption mechanism used may be AES with a 256 bit key-length in GCM mode. The encryption mechanism may provide an authentication mode.

In a second aspect, the disclosure provides a computer system comprising computer apparatus associated with a first location, a second location and a third location, and adapted for migrating credentials from the first location to the second location according to the method as described above in relation to the first aspect.

In a third aspect, the disclosure provides a cloud service adapted to perform the role of the third location according to the first aspect of the disclosure.

In summary, the disclosure herein relates to methods and computing systems for enabling transfer of active credentials from a location where they are stored to a second location where they are currently being used or where they will be used. The method relies on using an intermediate location (third location) to store encrypted credentials after they have been identified for transfer and they have been synchronised - the role of an intermediate location may be provided by a cloud service, for example. Credentials are transferred from the first location to the second location, using encrypted information stored in the third location, only when the credentials are needed. In this way, the method avoids overloading the system with the transfer of credentials before they are needed in the second location and ensures that migration is achieved securely and without loss of data.

### Brief Description of the Drawings

Figure 1 shows schematically a general embodiment of the disclosure;
Figure 2 shows schematically a distributed transaction architecture using a four-party model;
Figure 3 illustrates elements of a complex distributed system adapted to implement the transaction architecture of Figure 2;
Figure 4 shows schematically an exemplary system for enabling digital transactions in the transaction architecture of Figures 2 and 3;
Figure 5 shows schematically a data transfer process between an origin processing centre and a destination processing centre according to embodiments of the disclosure.
Figure 6 shows a schematic diagram of the encryption of the tokens identified for migration from the origin Token Vault 10A and transfer of these tokens to the ET-TV.
Figure 7 shows a schematic diagram representing the encryption mechanism used in embodiments of the disclosure.
Figure 8 shows a schematic diagram of the inputs and outputs for the encryption mechanism used in embodiments of the disclosure.
Figure 9 provides a flow diagram of the creation of a new transferable token in accordance with embodiments of the disclosure.
Figure 10 provides a schematic diagram of the data stored at the origin Token Vault 10A and the ET-TV at the start and at the end of the process illustrated in Figure 9.
Figure 11 shows a flow diagram of an example of a transaction performed with an encrypted token earmarked for migration to a destination database in accordance with embodiments of the disclosure.
Figure 12 shows provides a schematic diagram of the data stored at the backup destination Token Vault 21A, at the ET-TV and at the destination Token vault 20A at the end of the process illustrated in Figure 11.
Figure 13 provides a flow diagram of the migration of a token to a destination Token Vault, based on a request received at the ET-TV to update the token's status, according to embodiments of the disclosure.

### Detailed Description

General and specific embodiments of the disclosure will be described below with reference to the Figures.

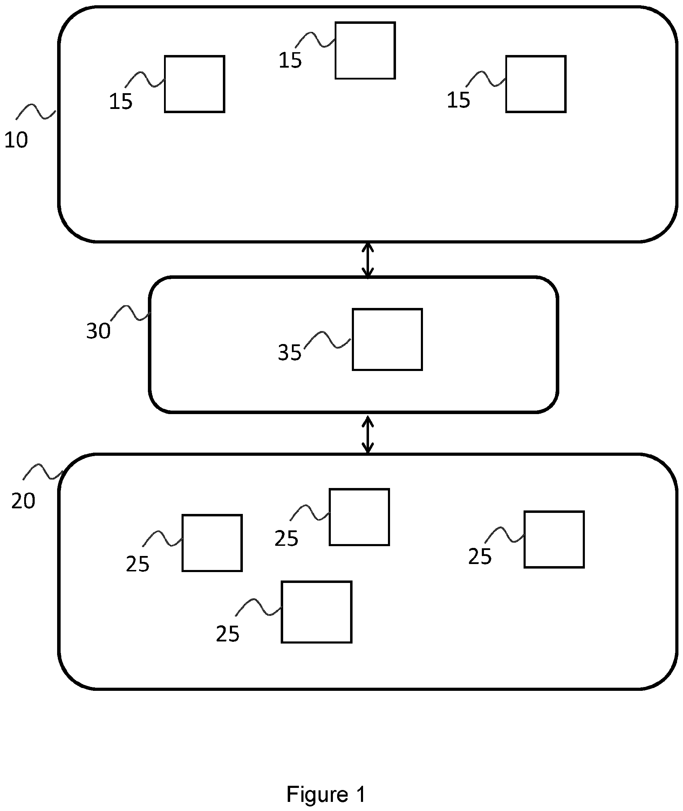

Figure 1 shows a general embodiment of the disclosure, indicating how the approach of the disclosure addresses the identified problem. Figure 1 shows a first network 10 in which a set of credentials are currently being used - some of these credentials -- a subset of the initial set chosen based on certain criteria, e.g., credentials that simultaneously belong to a Bank b AND a Wallet Provider/Token Requestor w -- are identified as needed for future use in a second network 20. In the example shown, there are multiple points 15 within the first network where the credential is currently being used, and there are multiple points 25 within the second network where the credential will need to be available for future use.

Also shown in a third network 30 - this is used as an intermediate step in the migration process. First of all, the identified credentials are synchronised at all of the points 15 within the first network where they are used - after synchronisation, the credentials are encrypted and migrated to the third network 30. In the third network 30, which may be realised through the cloud, for example, there is only one "use" point 35 shown. As far as the credentials are concerned, the third network 30 is used for migration and not for active use. When required, the encrypted credentials are transferred to the second network 20 for decryption and use, and the set of encrypted credentials are then deleted from the third network 30. When the transferred credential in the second network 20 is successfully used to perform a payment transaction (in the destination network) then it is also deleted from the first network 10 (representing the origin network)

Using this approach, the use of the credential in the second network 20 can be achieved in a controlled and effective manner without risk of data loss. Synchronisation in the first network 10, and holding the synchronised credential in the third network 30 in a safe encrypted form, allows a fast and effective transition to use of the credential in the second network 20 when required.

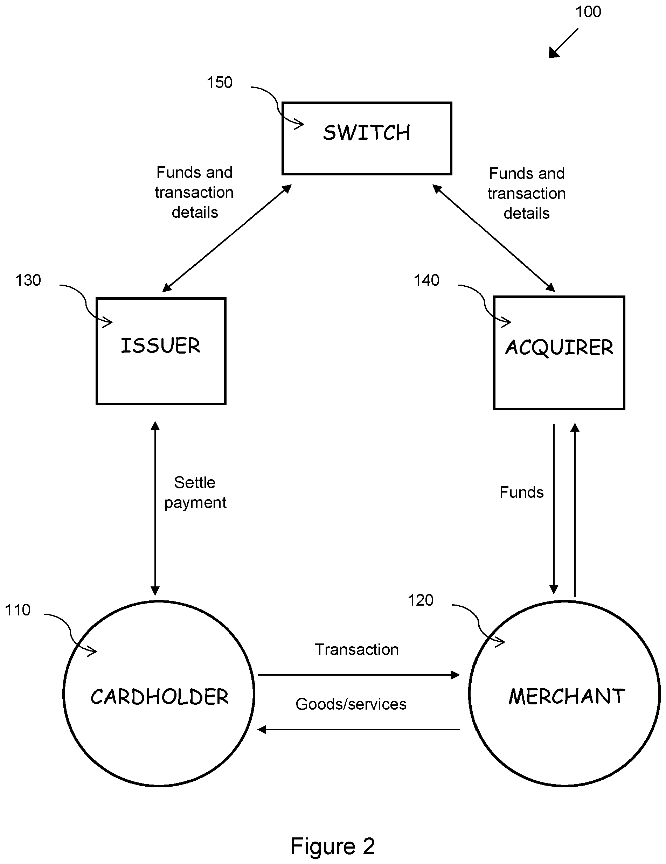

Figure 2 is a block diagram of a typical four-party model or four-party payment transaction scheme. The diagram illustrates the entities present in the model and the interactions occurring between entities operating in a card scheme.

Normally, card schemes - payment networks linked to payment cards - are based on one of two models: a three-party model or a four-party model (adopted by the present applicant). For the purposes of this document, the four-party model is described in further detail below.

The four-party model may be used as a basis for the transaction network. For each transaction, the model comprises four entity types: cardholder 110, merchant 120, issuer 130 and acquirer 140. In this model, the cardholder 110 purchases goods or services from the merchant 120. The issuer 130 is the bank or any other financial institution that issued the card to the cardholder 110. The acquirer 140 provides services for card processing to the merchant 120.

The model also comprises a central switch 150 - interactions between the issuer 130 and the acquirer 140 are routed via the switch 150. The switch 150 enables a merchant 120 associated with one particular bank acquirer 140 to accept payment transactions from a cardholder 110 associated with a different bank issuer 130.

A typical transaction between the entities in the four-party model can be divided into two main stages: authorisation and settlement. The cardholder 110 initiates a purchase of a good or service from the merchant 120 using their card. Details of the card and the transaction are sent to the issuer 130 via the acquirer 140 and the switch 150 to authorise the transaction. The cardholder 110 may have provided verification information in the transaction, and in some circumstances may be required to undergo an additional verification process to verify their identity (such as 3-D Secure in the case of a remote transaction - e.g., an online transaction with a server). Once the additional verification process is complete the transaction is authorised.

On completion of the transaction between the cardholder 110 and the merchant 120, the transaction details are submitted by the merchant 120 to the acquirer 140 for settlement.

The transaction details are then routed to the relevant issuer 130 by the acquirer 140 via the switch 150. Upon receipt of these transaction details, the issuer 130 provides the settlement funds to the switch 150, which in turn forwards these funds to the merchant 120 via the acquirer 140.

Separately, the issuer 130 and the cardholder 110 settle the payment amount between them. In return, a service fee is paid to the acquirer 140 by the merchant 120 for each transaction, and an interchange fee is paid to the issuer 130 by the acquirer 140 in return for the settlement of funds.

In practical implementations of a four-party system model, the roles of a specific party may involve multiple elements acting together. This is typically the case in implementations that have developed beyond a contact-based interaction between a customer card and a merchant terminal to digital implementations using proxy or virtual cards on user computing devices such as a smart phone.

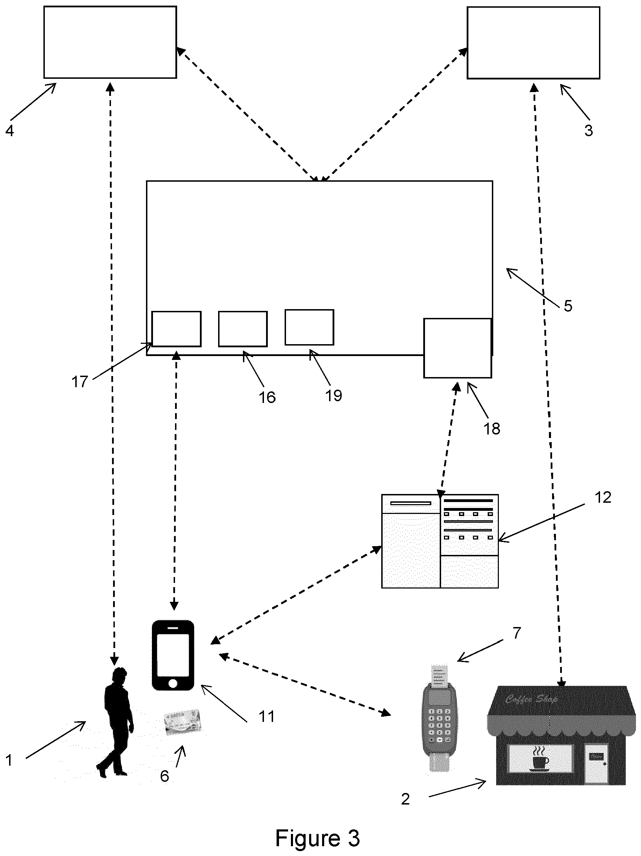

Figure 3 shows an architecture according to an embodiment of the disclosure appropriate for interaction between a cardholder and a merchant. This Figure shows a general-purpose architecture for reference but shows in particular elements of an architecture used when a cardholder carries out a remote (e.g., an online) transaction with a merchant server.

For a conventional transaction, a cardholder 1 will use their payment card 6 - or a mobile computing device such as smartphone 11 adapted for use as a contactless payment device - to transact with a POS terminal 7 of a merchant 2. However, in embodiments relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, as described below. The smart phone 11 can use this to transact with a merchant POS terminal 7 using NFC or another contactless technology, or to make a payment in association with its wallet service as discussed below. However, online transactions with a merchant are of particular interest in connection with embodiments of the disclosure, rather than contact or contactless transactions with a merchant POS terminal 7. To make an online transaction, the smartphone 11 may also be able to interact with a merchant server 12 representing the merchant 2 over any appropriate network connection, such as the public internet - the connection to the merchant may be provided by an app or application on the computing device.

The transaction scheme infrastructure (transaction infrastructure) 5 here provides not only the computing infrastructure necessary to operate the card scheme and provide routing of transactions and other messaging to parties such as the acquirer 3 and the issuer 4, but also a wallet service 17 to support a digital wallet on the cardholder computing device, and an internet gateway 18 to accept internet based transactions for processing by the transaction infrastructure. In other embodiments, the wallet service 17 may be provided similarly by a third party with an appropriate trust relationship with the transaction scheme provider. To support tokenization, a token service provider 19 is present (again, this is shown as part of transaction infrastructure 5 but may be provided by a third party with appropriate trust relationships), and the transaction scheme infrastructure provides a digital enablement service 16 to support the performance of tokenized digital transactions, and to interact with other elements of the system to allow transactions to be performed correctly - this digital enablement service may include other elements, such as token service provision and digital payment application personalization with functionality and security parameters, such as transaction keys and public key certificates.

Generally, the tokenisation process is carried out by a transaction scheme or an appropriate service provider with the permission of the payment card issuer (the issuing bank with which the cardholder has an account). Tokenised transactions are routed in the transaction scheme so that the primary account number (PAN) associated with the tokenised card can be recovered from a digital vault, also called token vault (TV), allowing normal processing of the transaction. The data associating the issuing bank and the digital wallet provider (or token requestor) where a token is stored is maintained at a data centre within a distributed transaction systems and can be used to identify at an existing moment tokens associated with a specific issuing bank.

For a tokenized transaction, the transaction is validated in the transaction scheme by mapping the cardholder token to their card PAN, checking the status of the token (to ensure that it is in date and otherwise valid) and any customer verification approach used. This allows the issuer to authorise the transaction in the normal manner.

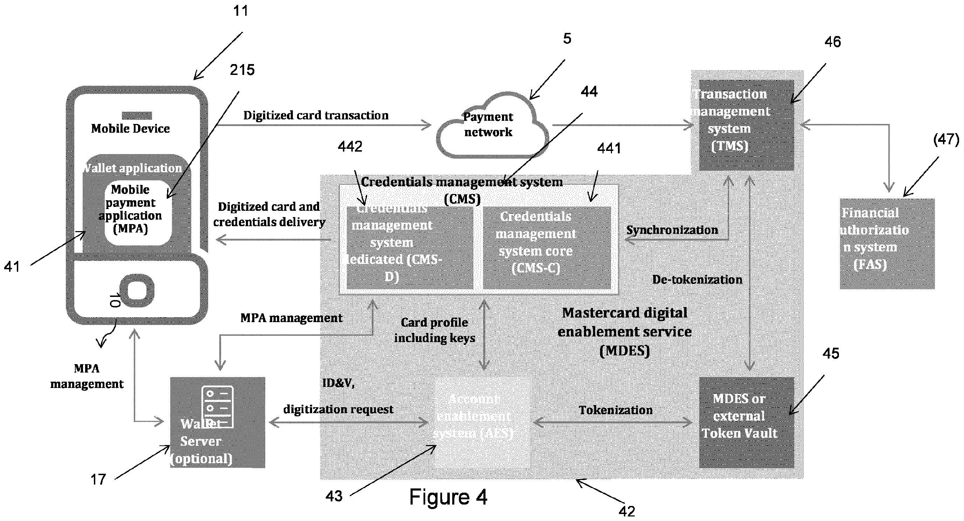

Figure 4 shows elements of a transaction infrastructure to support digitized payments from a mobile device in more detail. This Figure shows as a specific example the applicant's Mastercard Cloud-Based Payment (MCBP) architecture - this is exemplary rather than specific to the disclosure and illustrates how the architecture is used to support a mobile payment application 215 on a mobile device (such as smartphone 11) - here the mobile payment application 215 is shown as contained within a wallet application or digital wallet 41. Such a digital wallet 41 may communicate with a wallet server 17 to allow management of the mobile payment application, and it also can be used to request digitization of a payment card 6 to be used by the mobile device 11.

The Mastercard Digital Enablement Service (MDES) 42 performs a variety of functions to support mobile payments and digitized transactions. As indicated above, the MDES 42 is exemplary only - other embodiments may use digitization, tokenization and provisioning services associated with other transaction processing infrastructures, for example. The wallet server 17 is not a part of the MDES 42 - and need not be present, for example if the mobile payment application 215 is not embedded within a digital wallet 41 - but acts as an interface between the mobile device 11 and the MDES 42. The MDES 42 also mediates tokenized transactions so that they can be processed through the transaction scheme as for conventional card transactions. The following functional elements are shown within the MDES 42: the Account Enablement System (AES) 43, the Credentials Management System (CMS) 44, the Token Vault 45, and the Transaction Management System (TMS) 46. These will be described briefly below.

The Account Enablement System (AES) 43 is used in card digitization and user establishment. It will interact with the mobile payment application (here through the wallet server 17) for card digitization requests, and it will populate the Token Vault 45 on tokenization and will interact with the CMS 44 to establish a card profile with associated keys for digital use of the card.

The Credentials Management System (CMS) 44 supports management of cardholder credentials and is a key system within the MDES 42. The core system 441 manages synchronisation with the transaction system as a whole through interaction with the TMS 46 and manages the channel to the AES 43. The dedicated system 442 provides delivery of necessary elements to the mobile payment application such as the digitized card and credentials and keys in the form needed for use. This system may also interact with the wallet server 17 for management of the mobile payment application.

The Token Vault 45 - which is shown here as within the MDES 42, but which may be a separate element under separate control - is the repository for token information including the correspondence between a token and the associated card. In processing tokenized transactions, the MDES 42 will reference the Token Vault 45, and tokenization of a card will result in creation of a new entry in the Token Vault 45.

Transaction Management System (TMS) 46 is used when processing tokenized transactions. If a transaction is identified by the transaction scheme as being tokenized, it is routed to the TMS 46 which detokenizes the transaction by using the Token Vault 45. The detokenized transaction is then routed to the issuer (here represented by Financial Authorisation System 47) for authorisation in the conventional manner. The TMS 46 also interacts with the CMS 44 to ensure synchronisation in relation to the cardholder account and credentials.

As digital transactions have become common and geographically widespread, decentralisation becomes necessary to achieve performance. In respect of use of tokens, this may mean that there is at least one backup Token Vault 45 available if the main Token Vault is offline for any reason. Moreover, there may need to be different MDES 42 systems (or parts of these systems) in different geographies, either to achieve performance targets, to satisfy local on-soil requirements for cryptography or performance of transactions, or both. This may mean that a token needs to be migrated from one geography to another. There are many ways in such decentralisation can be achieved - in principle any suitable architecture may be used to deliver services to clients, such as a public cloud, a private cloud, or a private distributed system. Transactions performed on a distributed system are usually coordinated across different nodes connected by a network, and where a node may be an aggregation of several computers and may cover more than one data centre with "real-time" connectivity and data sharing within a given node.

Data management within these decentralised distributed transaction systems can be problematic when data stored at one data centre is migrated to another data centre located at a different geographical location, particularly because different service instances need to relate to each other. In addition, due to the exceptionally large amount of data stored in these centres, a further difficulty from the data migration is ensuring that the migration is achieved without any loss of data.

Due to processing or administrative reasons, such as to fulfil requirements associated with the credit or debit card's country of issue or the user's country of origin, there may be a need to transfer tokens stored at a Token Vault of a data centre located at one geographical location to a Token Vault of a data centre located at a second geographical location. This provides various technical challenges.

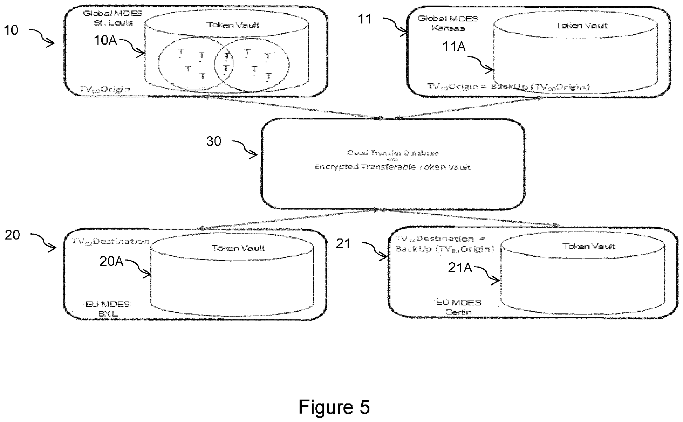

Figure 5 shows a schematic diagram of a data transfer process between an origin processing centre 10 and a destination processing centre 20 according to embodiments of the disclosure. The data in the exemplified case of Figure 5 correspond to tokens, however, the process is not limited to tokens, and can also be used to transfer other types of data, such as other forms of user credential.

In the distributed system exemplified in Figure 5, the main processing centre (sometimes referred to below as "database", as the main consideration in this process is the handling of tokens across multiple databases) 10 is located in St Louis (USA) and has a reserve, or backup database 11 located at a different location, which in the exemplified case is Kansas (USA). The destination database 20 of Figure 5 is located at Brussels (BXL), and has a backup database 21 located in Berlin. The backup databases 11 and 21 of Figure 5 store the same token information stored in their respective main databases 10 and 20, and are activated in case their respective main databases 10 and 20 fail.

The token transfer process starts with the creation of a central node database 30 that acts as a coordination point between the origin and destination databases. The central node 30 can be treated as an intermediate point between the origin database 10 and the destination database 20 in the data transfer process. The central node is desirably easily accessible from the origin or the destination - it may for example be realised as a cloud database. Therefore, the first step of the process converts a peer-to-peer network, where all nodes are connected to each other, into a network having a central node. Having a central node as an intermediate step in the data transfer between databases enables to synchronously updated the origin database 10 and the destination database 20, without interruption of service to the points within the networks where the data are being used.

One problem associated with the transfer of credentials between databases is the overhead resulting from transferring a large amount of data, or large blocks of data at the same time to achieve the transfer of all the data stored at the origin database. Common methods used to perform the transfer of tokens (or credentials) from one database to another transfer the tokens irrespective of whether they are being used or not. Consequently, such standard processes result in transfer of data that is not needed at the destination database. In embodiments of the present disclosure, the data transferred are organised based on the users that want or need to transfer their tokens (or credentials) to a destination database. Therefore, after creating a central node 30, a following step of the process is to order the tokens based on the information correlating the issuing bank (**b**) with a token requestor or service wallet provider (**w**), for each token in the origin database 10. This step enables identifying for which tokens stored in the origin database 10, both members of the pair Bank/ Wallet Provider or Token Requestor (**b/w**) are situated in the region of the destination database, and therefore, that must be migrated from a Token Vault (TV) 10A at the origin database 10 to a Token Vault 20A at the destination database. Therefore, only active tokens are transferred from the origin database 10 to the destination database 20. These tokens are referred to as transferable tokens and are identified through their Token Unique Reference (TUR).

The tokens in the origin database 10 identified for migration are synchronized within the origin backup database. The synchronisation is performed by verifying all records from the Token Vault 10A at the origin database to the Token Vault 11A at the backup database that are pointed by the same token unique reference (TUR). If they are not identical, the backup database 11 is synchronised with the main database 10, or vice versa, since synchronisation is possible in both senses within the same database cluster, based on which database has more active and/or suspended tokens identified for migration in its Token Vault.

After the synchronisation of the origin database 10 and the origin backup database 11, the tokens identified for migration are encrypted and transferred from the origin database 10 to the central node database 30. The transferred tokens are stored in a Token Vault with the same TUR as database key. The Token Vault at the central node database 30 is also referred to as Encrypted Transferable Token Vault (ET-TV).

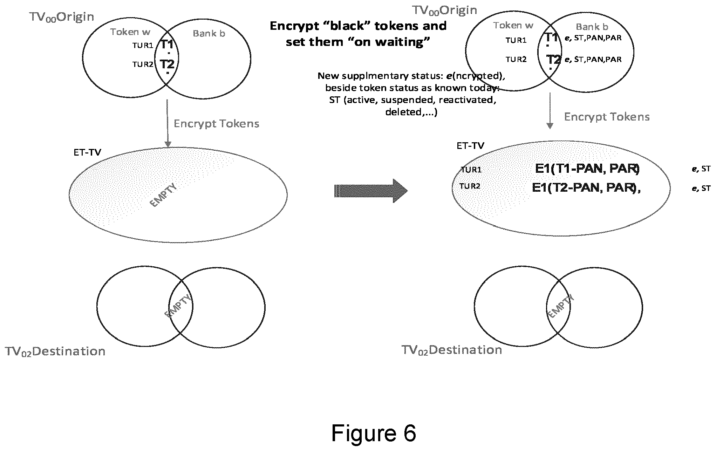

Tokens are only stored in the ET-TV while they are not being used. The encrypted tokens are transferred from the ET-TV at the central node database 30 to the destination database 20 when a request is received at the central node 30 to modify the status of a token that has been identified for migration. The request is sent to the central node 30 via the destination database 20 by either the issuing bank or the service wallet provider. The request sent to the central node database 30 may be related to a payment request as a part of a transaction, or to any other modification of the status of the token, such as, for example modification of the token from an active state to a dormant state. Other examples of status modifications that trigger a request to the central node database 30 are configuration updates of the token to perform at least one of: deactivate the token from an active state, to suspend the token from an active state, to deactivate the token from a suspended state, to inactivate the token from a deactivated state, and to activate the token from an inactive or suspended state. Accordingly, the method enables updating the state of a token in a single database (i.e., in the cloud) before transferring it to the destination database 20. Once the tokens are transferred to the destination database 20, they are deleted from the origin Token Vault 10A and the origin backup Token Vault 11A. Figure 6 shows a schematic diagram of the encryption of the tokens identified for migration from the origin Token Vault 10A and transfer of these tokens to the ET-TV.

The tokens transferred from the origin database 10 to the central node database 30 are encrypted using known data encryption methods, where both the token-PAN relationship and the Payment Account Reference (PAR) are encrypted in this process.

The encryption method used to protect the Encrypted Transferable Token Vault (ET-TV) in the central node database 30 (i.e., cloud database) should provide security (confidentiality, integrity, and authentication) and privacy protection for the standard mapping provided by the combination of [(Token-PAN), PAR]. In addition, to ensure that this remains a robust solution over time the encryption process should also provide post quantum (PQ) resistance, since a successful (internal) hacker could copy the EV-TV cloud database, and work on breaking it using a quantum computer, once these become readily available.

Several known encryption methods can be used that fulfil the above requirements; one example is the use of AES with 256 bits key-length in Galois field multiplications combined with Counter (GCM) Mode. Embodiments of the present disclosure are described using AES with 256 bits key-length in GCM, since this encryption method provides high post-quantum (PQ) resistance at this key length. Because the PQ resistance of a symmetric key algorithm is the length of its key divided by two, the AES 256 encryption method, which has a 256 bits key, results in an effective 128 bits PQ resistance (i.e., 2¹²⁸) - this is considered unbreakable with current quantum architectures.

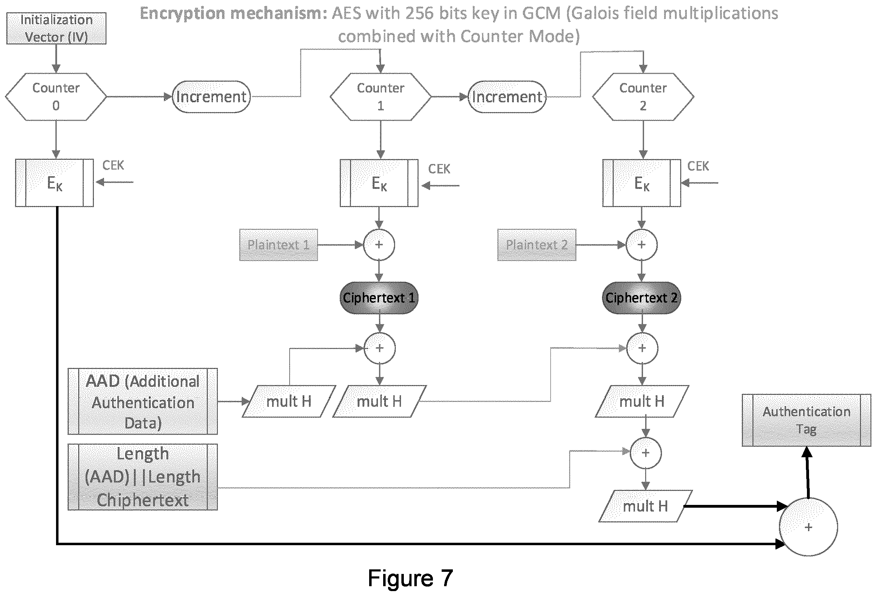

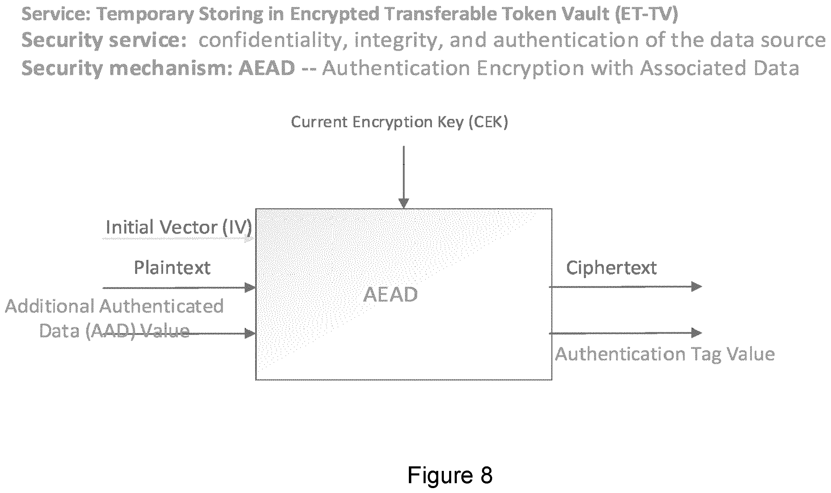

Figure 7 provides a schematic diagram representing the encryption mechanism using AES with 256 bits key-length in GCM mode combined with an authentication mode, used in an embodiment of the present disclosure, where the authentication mode provides an additional security step. As provided by the diagram in Figure 7, the enchained counter mode is applied for encrypting the Plaintext= Plaintext 1 ∥ Plaintext2 ∥ ... with an Initialisation Vector (IV) and a set of counters. At the encryption process, Counter 0 starts with the initial value of the Initiation Vector and increments it before passing it as an Initialisation Vector to the next counter: Counter 1 = IV+1. Counter 1 is: i) encrypted EK as one singular 128 bits block with the AES in Electronic Codebook (ECB) Mode using a key K = CEK -- "Current Encryption Key", whose computation will be detailed in the description of Figure 8, and ii) XORed with the first plaintext "Plaintext 1" to create "Ciphertext1". iii) Counter 1= Counter 1+ 1 is itself incremented before passing it to the second plaintext encryption pilar as Initialisation Vector to the second counter. The same process is followed for counter 2.

The integrity and authentication process are performed after the encryption. This feature is built with a special cipher block chaining message authentication code (CBC-MAC) for constructing the "Authentication Tag". In the method used in embodiments of the present disclosure, a Galois field chain multiplication of Additional Authentication Data (AAD) is used with the cyphertexts as protected inputs, instead of using again the AES block cipher. This enables the use of the CEK key simultaneously for two services (encryption and MAC), while standard methods use one separate key per service.

Figure 8 shows a schematic diagram of the inputs and outputs for the encryption mechanism described in Figure 7, which corresponds to that used for the token transfer process with the AES 256 GCM cryptographic algorithm implementing the *Authentication Encryption with Associated Data* (AEAD) security mechanism. For the encryption of a token, one of the inputs is Plaintext that includes the token-PAN mapping to be transferred and the PAR (Payment Account Reference) which is a reference number used to link a PAN to its tokens, including information of all the tokens derived from the PAR through tokenization (tokens used in different devices/platforms). Another input of the mechanism in Figure 8 is the initialization vector which includes the information correlating the owner of the token (i.e., issuing bank) and the entity managing the token (i.e, a wallet provider or token requestor). In addition, the data that needs to be authenticated is also provided as an input through the Additional Authentication Data (AAD) that provides information related to where the token is stored and the destination, and which includes, but is not limited to:
- Data about hosting platform of the token, before transfer: *Security Technology Index* (SE, TEE, REE, HCE), *Platform Technology Index* (mobile, tablet, wearable);
- Data about the consumer to which the initial card (PAN) was issued: *consumer's family index, consumer's member index* in his family, etc.;
- TV_{xy} - token vault of the source;
- [TV_{xy}(destination 1), TV_{xy}(destination 2), ....,] array of Token Vaults where the token may be sent for operation after geographical change.

Taking all the inputs provided in Figure 8 and processing the inputs through a parametrisation applied with a Current Encryption Key (CEK) will provide as outputs a Ciphertext and an Authentication Tag Value. The CEK, may be either derived from a system key, or may be provided by a key management network such as, for example, the NODES system. The Ciphertext is computed and corresponds to the result of encryption performed on plaintext. As such the Ciphertext is a storable encrypted mapping in the ET-TV of the [(token-PAN), PAR] pair. The Authentication Tag Value is computed and bundled together with the Ciphertext and is used by the destination Token Vault to verify the information in the ciphertext.

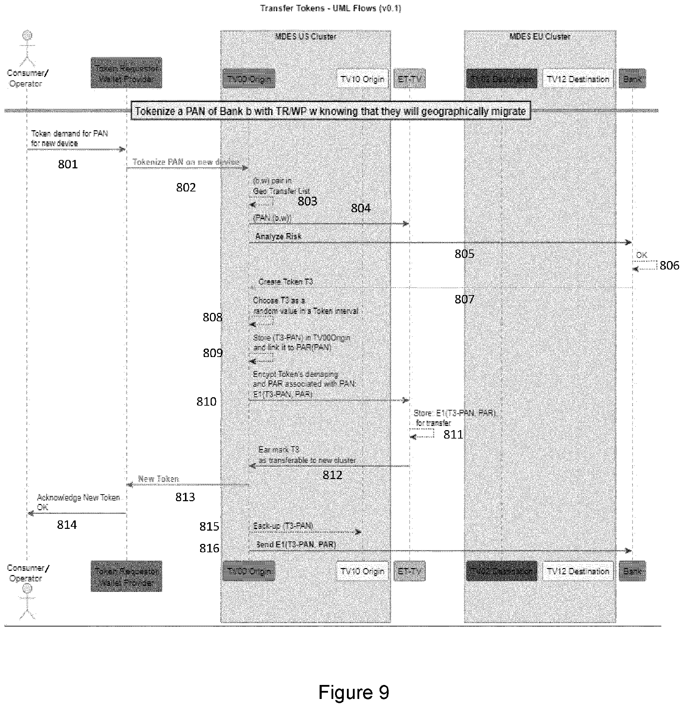

Exemplary cases will now be described based on the general encrypting and authentication mechanism described above. Figure 9 provides a flow diagram of a first example of a tokenised PAN process, where a new transferable token T3 is created by the Token Requestor or Wallet Provider (w) with the issuing Bank (b) for a new device of a user, after the Encrypted Transferable Token Vault (ET-TV) 30 is created, but before the Token Requestor or Wallet Provider and issuing Bank (b) change their access endpoints from the origin Token Vault 10A to the destination Token Vault 20A. At step 801 a consumer/operator issues a token demand for a PAN for the new device that is received by the token requestor or wallet provider. At step 802 the token requestor or wallet provider sends the token demand to the origin Token Vault 10A, and at step 803 the origin Token Vault 10A verifies if the pair token requestor or wallet provided issuing bank ([**w**,**b**]) is on a list of geographical transfers for migration. If the origin Token Vault 10A confirms that the pair token requestor or wallet provided issuing bank ([**w**,**b**]) is on the list to be migrated to a new database at a different location nearer to them, to shorten their response times, then, at step 804 it sends a notification to the ET-TV to prepare the ET-TV to receive the encrypted information of the PAN and of the token requestor or wallet provided issuing bank ([w,b]) pair. At step 805 the request is sent by the origin Token Vault 10A to the issuing bank to analyse the risk of issuing a new token for the PAN for the user using a device with certain characteristics and performing transactions on a specified channel (e.g., to evaluate history of the user, and/or to check on some possible reported weaknesses of his/her device type already known to the issuer/bank on that designated interaction channel, etc.). At step 806 the issuing bank verifies the risk, and if the request is approved, at step 807 the issuing bank sends an approval for creating of a new token T3 to the origin Token Vault 10A. At step 808, the origin Token Vault 808 receives the bank's approval for a new tokenization linked to that PAN, and based on this approval the Token Vault 10A creates a new token on behalf of the issuing bank. The Token Vault 10A creates the new token T3 choosing at random a value from within a Tokens pool (or Tokens interval) of available token values that have not yet been allocated. After choosing the token, at step 809 the token-PAN information is stored at the origin Token Vault 10A and is linked to the corresponding PAR for the PAN. One can note that the PAN-token relationship is at the same time the encryption key for the token to PAN de-mapping and the data to be protected through use of the token on the processing segment from the merchant to the acquirer (instead of the PAN itself). In addition, the origin Token Vault 10A also includes an earmark to the encrypted information to inform the ET-TV that the token T3 is transferable to a destination database 20 in the first transaction made using T3. Consequently, as soon as a request for a transaction using T3 is received by the TMS 46 (in Figure 4), the migration to the destination database can be performed. The encrypted information, together with the PAN-token pair and PAR information is also stored at the origin backup database 11 (as shown in Figure 5) for business continuity reasons. Once the pair PAN-token and PAR is generated, at step 810 the token's mapping and PAR associated with the corresponding PAN is encrypted to be sent to the ET-TV database 30. At step 811, the ET-TV stores the encrypted (Pan-token, PAR) information that will be transferred (or migrated) once a transaction request associated with token T3 is received at the ET-TV. At step 812 the ET-TV sends the information to the origin Token Vault 10A that the token T3 has been stored for transfer, and at step 813 the new token T3 is sent from the origin Token Vault 10A to the token requestor or wallet provider. This is followed by step 814, where the new token T3 is sent to the consumer/operator that initiated the request.

This process also updates the origin backup database 11A with the information about the new token T3 (at step 815) and the encrypted information on the (Pan-token, PAR) pair is also sent to the issuing bank (at step 816), which allows the issuing bank to update the personalisation of devices linked to the user initiating the token request, by using the PAN associated with the new token T3.

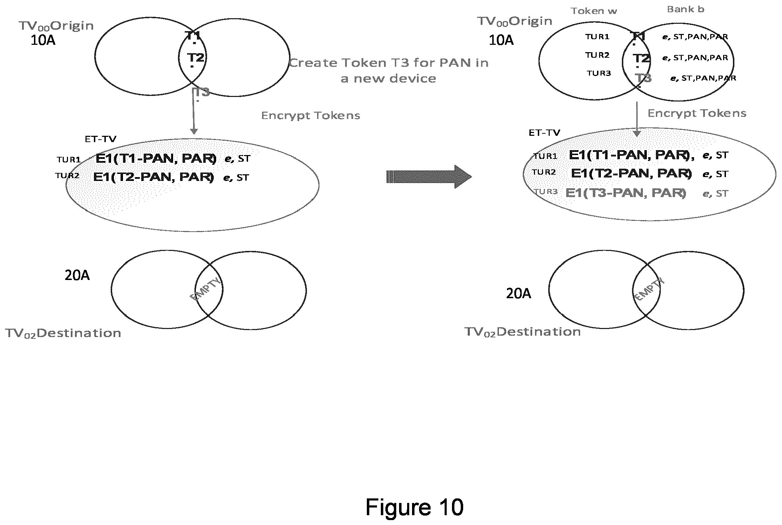

Figure 10 provides a schematic diagram of the data stored at the origin Token Vault 10A and the ET-TV at the start of the process illustrated in Figure 9 and at the end of the process. Such that at the end of the process exemplified in Figure 9, a new token T3 is stored at the origin Token Vault 10A and encrypted information related to the [T3-PAN, PAR] pair is stored at the ET-TV, while no tokens have yet been transferred from the origin database 10 to the destination database 20.

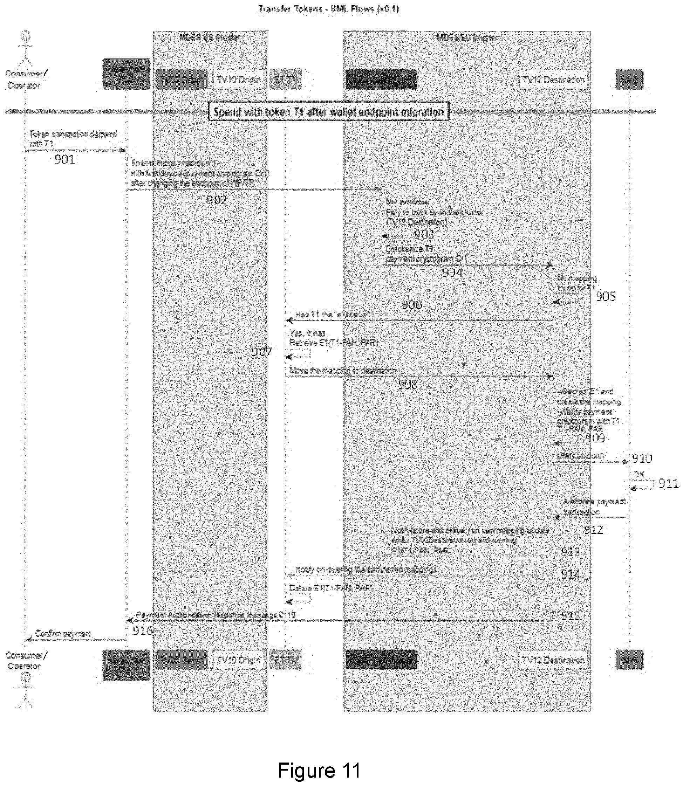

Figure 11 provides a flow diagram of an example of a transaction performed with an encrypted token earmarked for migration to a destination database 20. In this example of the present disclosure the token requestor or wallet provides completed the migration of the processing address from Token Vault 10A at the origin database 10 to the Token Vault 20A at the destination database 20. In this case, when the consumer attempts to trigger a new payment transaction using one of the ET-TV stored tokens, for example T1 (step 901), the data processing that is performed is described below with basis on the steps illustrated in the diagram of figure 11.

In this example it is assumed that the destination Token Vault 20A is temporarily down. Therefore, when the payment request is sent to the destination Token Vault 20A (step 902) the traffic of the wallet providers or token requestors that completed the migration is redirected to the backup processor of the new cluster, namely backup destination Token Vault 21A (steps 903). The token requestor or wallet provider (w) points to the backup destination Token Vault 21A to request for processing of a tokenized transaction with T1, with respect to which the cryptogram Cr1 was also produced (step 904). At the backup destination Token Vault 21A mappings are verified, but there is no mapping yet for T1, which can provide the PAN (step 905). As such, the destination Token Vault 21A does not attempt to verify the payment cryptogram first, but it rather synchronises its detokenization tables with ET-TV (since cluster's main database destination Token Vault 20A is down), prior to any other processing of the current payment transaction. At step 906, the backup destination Token Vault 21A queries the ET-TV on the status of T1, and if T1 is encrypted, then the ET-TV retrieves the stored encrypted detokenization pair corresponding to its token T1, E1(T1-PAN, PAR) (step 907). At step 909, after receiving the cryptogram E1(T1-PAN, PAR) (step 908), the backup destination Token Vault 21A decrypts the cryptogram E1(T1-PAN, PAR) using the AES 256 GCM, and obtains the new mapping (T1-PAN), and the PAR of the account which is pointed by the PAN. The (T1-PAN), PAR is securely stored in the backup destination Token Vault 21A. Also at step 909, the backup destination Token Vault 21A may also verify the payment cryptogram produced on the transaction amount by the token T1.

Since the Bank b is connected to the card issuer network, and the backup destination Token Vault 21A is connected to the same network, at step 910 the backup destination Token Vault 21A sends the 0100-payment authorization message with PAN and amount towards the issuing Bank, for authorizing the new payment transaction. After validating the account's balance against the transaction amount (step 911), the bank authorizes the payment transaction for the back-up processor (step 912). The latter will inform the Merchant POS about the successful payment transaction authorization (step 915), and it will also send a confirmation message on the consumer's device for concluding its payment experience (step 916). Finally, the consumer device informs the consumer/ operator about the successful completion of his/her payment transaction with the chosen token.

In the background, and asynchronous with the payment process itself, the backup destination Token Vault 21A also notifies the destination Token Vault 20A (step 913), to decrypt the information sent in the notification, which is the cryptogram E1(T1-PAN, PAR), and upgrade its detokenization database with the token-PAN relationship and its corresponding PAR reference (T1-PAN, PAR). Alternatively, the destination Token Vault 20A can contact itself the ET-TV to get its latest mappings. At step 914, backup destination Token Vault 21A notifies the ET-TV to delete its existing mappings. This ends the payment transaction with a token that had to migrate from an origin database located for example in the US to a destination database located, for example in the EU.

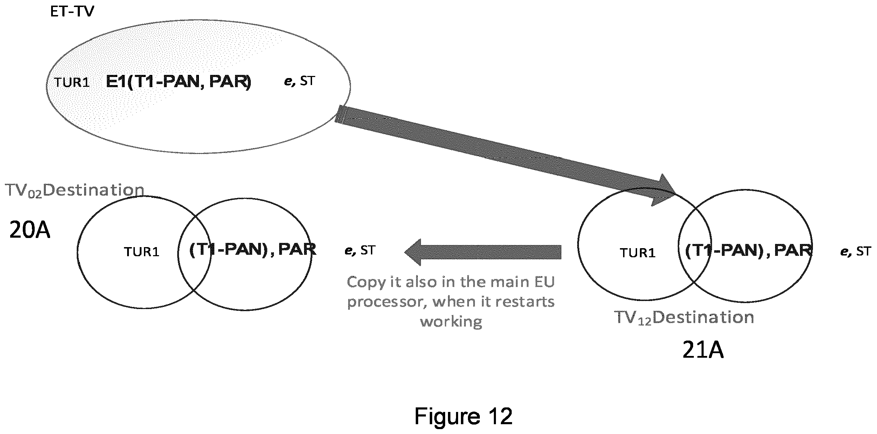

Figure 12 provides a schematic diagram of the data stored at the backup destination Token Vault 21A, at the ET-TV and at the destination Token vault 20A at the end of the process illustrated in Figure 11.

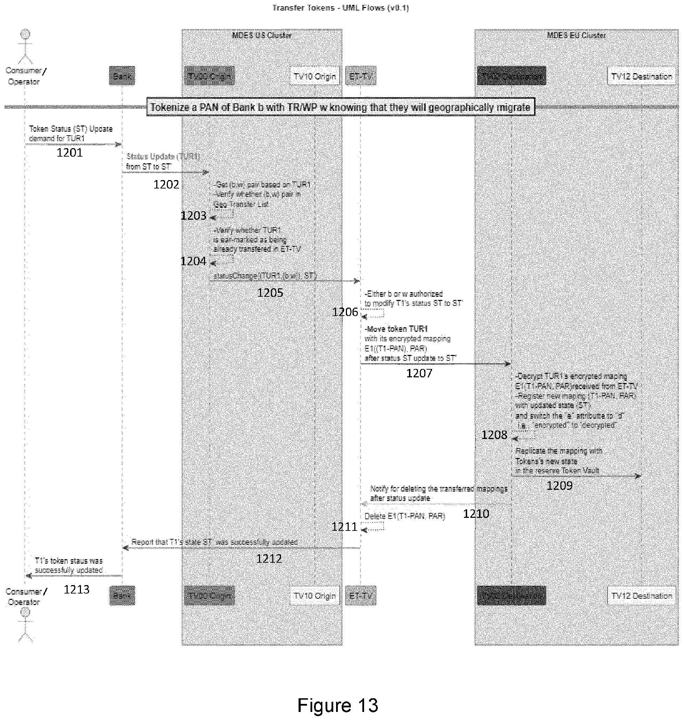

Figure 13 provides a flow diagram of the migration of a token to a destination Token Vault, based on a request received at the ET-TV to update the token's status. When the token's status in the encrypted cloud (i.e., ET-TV) must change for any operational reason, the corresponding cloud space must be freed as soon as possible to allow storing of encrypted mappings for new tokens managed by other token requestor or wallet provider/ issuing bank (w,b) pairs, which are in the migration process from one geographical location to another. To allow for this process to occur, the requirement is that either the issuing bank b, and/or the wallet provider/token requestor (w), and at least the one which requires the token's status change, has (or have) completed the migration of the processing address from the origin Token Vault 10A to the destination Token Vault 20A (or the backup destination Token Vault 21A, if the destination Token Vault 20A is functionally unavailable).

At step 1201 of Figure 13, when the operator of either b, or w (the example provided in Figure 13 shows the issuing bank operator) requires the change of a (TUR1) token's status from ST (e.g., active) to ST' (e.g., temporarily suspended from payments), the relaying server of the issuing bank will direct the request to the initial origin Token Vault 10A or the backup origin Token Vault 11A, if the former is not functional (step 1202). After verifying its Token Vault for the provided TUR1, the origin Token Vault 10A server, based on the TUR1, identifies the token requestor or wallet provider/ issuing bank (b, w) pair to whom the token belongs and by whom its status can be managed, and verifies whether the identified ownership (b, w) is in the geo-transfer list of tokens which were already moved in encrypted format in ET-TV (step 1203). At step 1204 the origin Token Vault 10A checks whether the TUR1 was earmarked as being already encrypted and migrated to ET-TV for transferring towards its destination after the detokenization database move. If all these controls are fulfilled, the origin Token Vault 10A sends, at step 1205 a statusChange API request to the ET-TV. The request indicates which TUR1 token's status is concerned for changing from current state ST to the new modified state ST', and under whose (**w**,**b**) management/control the token is placed (step 1206). The ET-TV analyses the fulfilment by the issuing bank of the conditions marked up in the token status command's access control list. If ET-TV identifies that the issuing bank is authorized to perform the status change, the encrypted database line E1((T1-PAN), PAR) corresponding to TUR1, changes ST to ST' (step 1207). At step 1208, ET-TV sends the encrypted mapping to the destination Token Vault 20A, which will decrypt it, register the new mapping (T1, PAN), PAR with the modified status ST' (instead of ST) and marking it up as "decrypted". At step 1210, the destination Token Vault 20A notifies the ET-TV that it hosted the new mapping, with its modified status and that has already replicated in the backup destination Token Vault 20A for business continuity in case of primary Token Vault processor's unavailability (step 1209). At step 1212, EV-TV informs back both the issuing bank and its operator (step 1213) of the operation's success for both changing the token status and the migration of the token mapping from the ET-TV to the destination Token Vault 20A. At the end of the process, ET-TV deletes the E1(T1-PAN, PAR) to free-up space for stoting of the encrypted information for other tokens identified for migration from an origin database to a destination database.

While the above embodiments relate specifically to the migration of tokens, it will be appreciated by the skilled person that the same principles may be employed for the migration of any other credential, and may be used in contexts that are not financial. For example, the same approach may be used to migrate a user's credential used for access control from one geography to another geography. More generally, the skilled person will appreciate that many modifications may be made to the embodiments described above within the spirit and scope of the claims.

## Claims

1. A method for migrating credentials from a first location to a second location, the method comprising:
identifying a set of credentials active at the first location for migration to the second location;
synchronising the identified credentials where used in connection with the first location;
encrypting the synchronised credentials to form a set of encrypted credentials;
migrating the set of encrypted credentials to a third location, wherein the third location is used only for transfer and not for use of the credentials;
copying the set of encrypted credentials from the third location to the second location;
decrypting the encrypted credentials at the second location; and
deleting the copied set of encrypted credentials from the third location.

2. The method for migrating credentials of claim 1, wherein the encrypted synchronised credentials are earmarked as transferrable for at least a first database and at least one backup database associated with the first location.

3. The method for migrating credentials of claim 2, wherein the first database is a primary database for storage and use of credentials in connection with the first location and the at least one backup database stores the same credentials information as the first database and is used if the first database fails.

4. The method for migrating credentials of any preceding claim, wherein the credentials are tokens representing payment cards in a transaction system.

5. The method for migrating credentials of claim 4, wherein the encrypted synchronised tokens are stored at the third location with a same token unique reference as in the first location.

6. The method for migrating credentials of claim 4 or claim 5, wherein the encrypted tokens are copied to the second location on the token being requested for a payment transaction associated with the second location.

7. The method for migrating credentials of claim 6, wherein on a payment transaction associated with the second location being received for the token, the method further comprises:
requesting, from the second location, an updated status of the token;
identifying the token as a transferable token;
transferring the set of encrypted credentials for the token to the second location.

8. The method for migrating credentials of claim 7, wherein prior to requesting an updated status of the token, the method synchronises detokenization tables of the second location with the third location.

9. The method for migrating credentials of claim 7 or claim 8, wherein the method further comprises:
requesting, by the second location, the set of encrypted credentials, wherein the set of encrypted credentials comprise an encrypted detokenisation pair, on the token being identified as transferable; and
decrypting the requested token from the encrypted detokenization pair at the second location.

10. The method for migrating credentials of claim 6, wherein the encrypted tokens are copied to the second location on a token status being changed such that the token status includes association with the second location.

11. The method for migrating credentials of any previous claim, wherein the third location is accessible via the cloud.

12. The method for migrating credentials of any previous claim, wherein the first, second and third locations comprise databases for storage of tokens.

13. The method for migrating credentials of any previous claim, wherein the encryption mechanism used is AES with a 256 bit key-length in GCM mode.

14. The method for migrating credentials of claim 13, wherein the encryption mechanism provides an authentication mode.

15. A computer system comprising computer apparatus associated with a first location, a second location and a third location, and adapted for migrating credentials from the first location to the second location according to the method of any of claims 1 to 14.
